# NEUE EUROPÄISCHE PATENTSCHRIFT

(11) **EP 3 132 648 B2**
(45) Veröffentlichungstag und Bekanntmachung des Hinweises auf die Entscheidung über den Einspruch: **29.06.2022**
(45) Hinweis auf die Patenterteilung: 12.06.2019
(21) Anmeldenummer: 15718177.7
(22) Anmeldetag: 09.04.2015
(51) Int. Cl.: H04W 4/40, H04W 88/06, H04L 29/06, H04W 84/18

(54) **VERFAHREN ZUM VERARBEITEN EINER FAHRZEUG-ZU-X-NACHRICHT, FAHRZEUG-ZU-X-KOMMUNIKATIONSMODUL UND SPEICHERMEDIUM**
METHOD OF PROCESSING A VEHICLE-TO-X MESSAGE, VEHICLE-TO-X COMMUNICATIONS MODULE AND STORAGE MEDIUM
PROCÉDÉ DE TRAITEMENT D'UN MESSAGE DE VÉHICULE À X, MODULE DE COMMUNICATION DE VÉHICULE À X ET SUPPORT DE STOCKAGE

(30) Priorität: 14.04.2014 DE 102014207093; 18.12.2014 DE 102014018672
(43) Veröffentlichungstag der Anmeldung: 22.02.2017
(73) Patentinhaber: Continental Teves AG & Co. OHG, 60488 Frankfurt am Main (DE)
(72) Erfinder: MENZEL, Marc, 35096 Weimar (Lahn) (DE)
(74) Vertreter: Schlosser, Martin
(86) Internationale Anmeldenummer: PCT/EP2015/057753
(87) Internationale Veröffentlichungsnummer: WO 2015/158606

(56) Entgegenhaltungen:
- EP-A2- 1 708 144
- DE-A1-102010 029 485
- "HTG BackgroundDocument", ETSI DRAFT; HTG BACKGROUNDDOCUMENT, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. ITS, 20. September 2012 (2012-09-20), Seiten 1-67, XP014086489, [gefunden am 2012-09-20]
- GEORGIOS KARAGIANNIS ET AL: "Vehicular Networking: A Survey and Tutorial on Requirements, Architectures, Challenges, Standards and Solutions", IEEE COMMUNICATIONS SURVEYS, IEEE, NEW YORK, NY, US, Bd. 13, Nr. 4, 1. Oktober 2011 (2011-10-01), Seiten 584-616, XP011387780, ISSN: 1553-877X, DOI: 10.1109/SURV.2011.061411.00019
- Berhard Oehry et al: "The Cardme Concept", CARDME-4 EUROPEAN COMMISSION - DG INFO, TELEMATICS APPLICATION PROGRAMME, TRANSPORT SECTOR, vol. d4.1 , pages 1-112,

## Beschreibung

Die Erfindung betrifft ein Verfahren zum Verarbeiten einer Fahrzeug-zu-X-Nachricht in einer Mehrzahl von Stufen in einem Fahrzeug-zu-X-Kommunikationsmodul sowie ein Fahrzeug-zu-X-Kommunikationsmodul und ein Speichermedium zur Durchführung des Verfahrens.

Die DE 10 2010 029 485 A1 beschreibt eine Fahrzeug-Antenneneinheit zur Teilnahme an der Fahrzeug-zu-Umgebung-Kommunikation entsprechend dem DSRC- oder ITS-G5-Standard mit einer Adhoc-Netzwerk-Antenne zum Senden und Empfangen im Bereich von 5,9 GHz, mit einer Satelliten-Antenne zum Empfang von Satelliten-Ortungssignalen und mit Treiberelementen, die zum bitweisen Aussenden bzw. zum Empfangen von Daten mit der Adhoc-Netzwerk-Antenne und der Satelliten-Antenne eingerichtet sind, und mit einer Recheneinheit zur Aufbereitung der Daten.

Fahrzeug-zu-X-Kommunikation befindet sich derzeit in einer Phase der Entwicklung und Standardisierung. Unter diesem Begriff werden insbesondere die Kommunikation zwischen Fahrzeugen (Fahrzeug-zu-Fahrzeug-Kommunikation) und die Kommunikation zwischen Fahrzeugen und Infrastruktur (Fahrzeug-zu-Infrastruktur-Kommunikation) verstanden. Standardisierungsprozesse laufen derzeit insbesondere bei ETSI, bei IEEE und bei SAE. Architekturen von Fahrzeug-zu-X-Kommunikationssystemen sind bei ETSI TC ITS und bei IEEE 1609 definiert worden und in entsprechenden Standarddokumenten festgehalten. Bislang wurden alle Architekturen jeweils nur entweder für den europäischen oder für den amerikanischen Markt ausgestaltet. Es ist nicht vorgesehen, beide Varianten zu vereinigen. Allerdings wurden die Systeme insofern harmonisiert, als die Funktionalität des IEEE Wave-Systems und des ETSI ITS ähnlich sind und auch ähnliche Daten übertragen werden beziehungsweise für Applikationen zur Verfügung stehen. Die auf Wave beziehungsweise ITS aufsetzenden Applikationen sind teilweise gleich, beispielsweise bei GLOSA (Green Light Optimal Speed Advisory) oder EVW (Emergency Vehicle Warning), teilweise sind sie aber auch deutlich unterschiedlich. Beispielsweise ist die Applikation "Blind Spot and Lane Change Warning" in Europa nicht geplant, während "Pre-Crash Airbag Support" in den USA nicht geplant ist.

Grundsätzlich können für die jeweiligen Märkte unterschiedliche Komponenten entwickelt werden. Diese können dann während der Herstellung in einem Fahrzeug verbaut werden, je nachdem für welchen Markt das Fahrzeug vorgesehen ist. Nachteilig an dieser Ausführung ist jedoch neben den hohen Entwicklungskosten die Konsequenz, dass ein Fahrzeug dann auf die Verwendung in einem bestimmten geografischen Gebiet eingeschränkt wäre und nur durch einen aufwändigen Austausch von Komponenten in einem Gebiet mit anderen Anforderungen an das Fahrzeug-zu-X-Kommunikationssystem betrieben werden könnte. Dies würde die Verbringung von Fahrzeugen in Märkte, für welche sie ursprünglich nicht gebaut wurden, deutlich erschweren. Ein derartiges Verbringen findet beispielsweise durch freie Importeure statt und kommt außerdem bei Militär- oder Diplomatenfahrzeugen häufig vor.

Um ein Fahrzeug so auszuführen, dass es für unterschiedliche Gebiete tauglich ist, sind deshalb aus dem Stand der Technik Lösungen bekannt, bei welchen für jedes Gebiet ein kompletter Stack zur Nachrichtenverarbeitung vorhanden ist und jeweils nur der für das jeweilige Gebiet benötigte Stack verwendet wird. Derartige Stacks sind jedoch häufig sehr aufwändig und haben deshalb einen hohen Speicherplatzbedarf. Das Mitführen der jeweiligen Software erfordert somit die Verwendung von Komponenten mit entsprechend großem Speicher. Dies kann die Verwendung günstiger Mikroprozessoren ausschließen, da sich in diesen die für zumindest zwei Gebiete notwendige Software nicht unterbringen lässt. Wenn beispielsweise ein Stack eine Größe von 8 GB hat, so muss ein Mikroprozessor einen Speicher von mindestens 16 GB aufweisen, wenn zwei Stacks vorgesehen werden sollen. Obwohl die meisten Fahrzeuge tatsächlich nur im vorgesehenen Gebiet benutzt werden, führt diese bekannte Lösung somit dazu, dass nur aufgrund des Speicherbedarfs deutlich leistungsfähigere und damit teurere Komponenten verwendet werden müssen. Die damit verbundenen erhöhten Kosten können insbesondere bei kleinen, günstigen Fahrzeugen die Einführung der Fahrzeug-zu-X-Kommunikation deutlich erschweren. Dies wäre von entscheidendem Nachteil, da eine sinnvolle Einführung der Fahrzeug-zu-X-Kommunikation nur dann möglich ist, wenn möglichst schnell ein Großteil der Fahrzeuge mit entsprechender Technik ausgerüstet wird.

Es ist deshalb eine Aufgabe der Erfindung, ein Verfahren zum Verarbeiten einer Fahrzeug-zu-X-Nachricht vorzusehen, bei welchem die Anforderungen an die zu verbauenden Komponenten reduziert sind. Es sind des Weiteren Aufgaben der Erfindung, ein Fahrzeug-zu-X-Kommunikationsmodul sowie ein Speichermedium zur Durchführung des Verfahrens vorzusehen.

Dies wird erfindungsgemäß durch ein Verfahren nach Anspruch 1, ein Fahrzeug-zu-X-Kommunikationsmodul nach Anspruch 6 und ein Speichermedium nach Anspruch 7 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Verarbeiten einer Fahrzeug-zu-X-Nachricht in einer Mehrzahl von Stufen in einem Fahrzeug-zu-X-Kommunikationsmodul. Erfindungsgemäß ist vorgesehen, dass Stufen einer ersten Gruppe von Stufen dazu konfiguriert sind, die Fahrzeug-zu-X-Nachricht in Abhängigkeit von einem Gebietsstatus des Fahrzeug-zu-X-Kommunikationsmoduls zu verarbeiten.

Der Erfinder der vorliegenden Anmeldung hat erkannt, dass sich die eingangs beschriebenen Probleme in vorteilhafter Weise dadurch lösen lassen, dass die jeweiligen Stacks in einzelne Stufen unterteilt werden. Jede Stufe repräsentiert dabei eine bestimmte Funktionalität, Anwendung oder sonstigen Teil einer Verarbeitung der Fahrzeug-zu-X-Nachricht. Diejenigen Stufen, welche Funktionen betreffen, die in unterschiedlichen Gebieten unterschiedlich ausgebildet sein sollen, können in Abhängigkeit von dem Gebietsstatus gesteuert werden. Andere Stufen, welche in allen Gebieten identisch funktionieren sollen, müssen jedoch nicht doppelt vorhanden sein. Bezogen auf die oben beschriebene Problematik bedeutet dies, dass für das Vorsehen von Funktionalitäten aus zwei Gebieten nicht zwei komplette Stacks vorzuhalten sind, sondern dass diejenigen Teile, welche für beide Gebiete identisch sind, nur einmal vorzuhalten sind. Der Speicherplatzbedarf wird dadurch insgesamt deutlich reduziert, so dass die Verwendung von günstigeren elektronischen Komponenten möglich ist. Der Systempreis wird hierdurch ebenfalls deutlich reduziert und damit auch die schnelle Marktdurchdringung des Systems, insbesondere bei preisgünstigen Fahrzeugen, unterstützt.

Das Fahrzeug-zu-X-Kommunikationsmodul kann beispielsweise als Mikrocontroller, Mikroprozessor, speicherprogrammierbare Steuerung (SPSS), anwendungsspezifischer integrierter Schaltkreis (ASIC) oder als andere frei programmierbare oder auch fest verdrahtete Komponente ausgeführt sein. Insbesondere kann das Fahrzeug-zu-X-Kommunikationsmodul Prozessormittel und Speichermittel aufweisen, wobei in den Speichermitteln ein Programmcode gespeichert ist, bei dessen Ausführung die Prozessormittel ein erfindungsgemäßes Verfahren ausführen.

Die erste Gruppe von Stufen ist eine Teilmenge der Mehrzahl von Stufen. Unter einer Mehrzahl wird hierbei grundsätzlich eine Anzahl von zwei oder mehr verstanden. Erfindungsgemäß ist die erste Gruppe von Stufen eine echte Teilmenge der Mehrzahl von Stufen, was insbesondere bedeutet, dass es noch weitere Stufen in der Mehrzahl von Stufen gibt, welche nicht der ersten Gruppe von Stufen angehören. Derartige Stufen, welche nicht der ersten Gruppe von Stufen angehören, können insbesondere diejenigen sein, welche in allen vorgesehenen Gebieten identisch funktionieren sollen und deshalb nur einmal vorhanden sein müssen.

Erfindungsgemäß ist vorgesehen, dass Stufen einer zweiten Gruppe von Stufen dazu konfiguriert sind, die Fahrzeug-zu-X-Nachricht unabhängig von dem Gebietsstatus zu verarbeiten, wobei die erste Gruppe von Stufen und die zweite Gruppe von Stufen keine Schnittmenge aufweisen. Bei der zweiten Gruppe von Stufen handelt es sich somit um diejenigen Stufen, welche für alle Gebiete identisch ausgeführt sein können.

Erfindungsgemäß machen die erste Gruppe von Stufen und die zweite Gruppe von Stufen zusammen die Mehrzahl von Stufen aus. Dies bedeutet, dass sich die Mehrzahl von Stufen eindeutig in die erste Gruppe von Stufen und die zweite Gruppe von Stufen unterteilen lässt. Weitere Stufen als solche, welche entweder abhängig vom Gebiet funktionieren (erste Gruppe) oder unabhängig vom Gebiet funktionieren (zweite Gruppe) sind typischerweise nicht vorhanden.

Gemäß einer Ausführung ist eine Anzahl von Stufen der zweiten Gruppe von Stufen in separater Hardware implementiert. Dies kann eine weitere Verringerung der Systemkosten bewirken, da Funktionalitäten, welche für alle in Frage kommenden Gebiete identisch sind, durch einen einmaligen Entwicklungsaufwand in separate Hardware implementiert werden können, welche dann in allen relevanten Gebieten verwendet werden kann. Das Entwickeln und Warten von Software ist durch eine solche Ausführung bezüglich dieser Funktionalitäten nicht mehr nötig. Es sei verstanden, dass beispielsweise eine solche Stufe oder auch mehrere solche Stufen, gemäß einer Ausführung sogar alle Stufen, der zweiten Gruppe von Stufen derart implementiert sein können.

Gemäß einer Ausführung ist ein ASN.1-Encoder/Decoder Teil der zweiten Gruppe von Stufen. Ein solcher Encoder/Decoder ist typischerweise so zu implementieren, dass seine Funktionalität unabhängig vom Gebiet ist. Er kann deshalb bevorzugt der zweiten Gruppe von Stufen zugeordnet werden. Beispielsweise kann er in einem separaten Hardwaremodul implementiert sein.

Die Stufen der ersten Gruppe von Stufen sind gemäß einer Ausführung in Software implementiert. Dies ermöglicht eine flexiblere Anpassung der gebietsspezifisch zu implementierenden Funktionalitäten. Eine Entwicklung von Hardwarekomponenten kann gerade bei Stufen der ersten Gruppe aufgrund der durch die Einschränkung auf ein bestimmtes Gebiet niedrigeren Volumina nicht rentabel sein.

Es sei verstanden, dass eine bestimmte Stufe in Abhängigkeit vom Gebietsstatus auch vollständig deaktiviert werden kann. Betrifft eine Stufe beispielsweise eine Funktionalität, welche in einem bestimmten Gebiet nicht verwendet wird, so kann bei Vorliegen des entsprechenden Gebietsstatus die entsprechende Stufe einfach deaktiviert werden.

Es sei des Weiteren verstanden, dass es viele unterschiedliche Funktionalitäten in der Fahrzeug-zu-X-Kommunikation gibt und dass die Variationen bezüglich des Gebiets bei den Funktionen, welche gebietsabhängig implementiert werden, äußerst weitreichend sind. Es ist deshalb nicht möglich, eine allgemeine Definition dafür zu geben, wie Stufen konkret auf eine Änderung des Gebietsstatus reagieren. Jedoch kann es in einer Implementierung eines Fahrzeug-zu-X-Kommunikationsmoduls leicht festgestellt werden, ob sich die Funktionalitäten abhängig von einer Änderung des Gebietsstatus verändern.

Es sei außerdem erwähnt, dass sich das Verfahren insbesondere sowohl für einen Empfangspfad wie auch für einen Sendepfad verwenden lässt.

Gemäß einer Ausführung weist das Verfahren ferner folgenden Schritt auf:
- Ermitteln des Gebietsstatus anhand eines Orts des Fahrzeug-zu-X-Kommunikationsmoduls.

Dieser Schritt des Ermittelns des Gebietsstatus wird vorzugsweise ansprechend auf ein Einschalten des Fahrzeug-zu-X-Kommunikationsmoduls durchgeführt. Dies kann beispielsweise unmittelbar beim Einschalten eines Fahrzeugs, also beispielsweise beim Einschalten der Zündung des Fahrzeugs, erfolgen. Der Gebietsstatus kann beispielsweise mit Hilfe eines Satellitennavigationsmoduls, eines Mobilfunknetzes, geeigneter Umgebungssensoren oder durch Abfrage beim Fahrer ermittelt werden. Da sich typischerweise der Gebietsstatus während einer Fahrt nicht ändert, kann dieser während der Fahrt im Regelfall beibehalten werden und muss nicht erneut überprüft werden. Wurde jedoch das Fahrzeug zwischen zwei Fahrten in ein anderes Gebiet gebracht, beispielsweise durch Transport in einem Flugzeug oder auf einem Frachtschiff, so wird automatisch der neue Gebietsstatus erkannt und entsprechend verwendet.

Gemäß einer Ausführung sind ein Multihopping-Modul und/oder ein Channel-Switching-Modul Teil der ersten Gruppe von Stufen. Hierbei handelt es sich um typische Module, welche eine Funktionalität aufweisen sollen, die abhängig vom Gebiet ist. Das Multihopping-Modul wird typischerweise beispielsweise in den USA deaktiviert, da diese Funktionalität dort nicht vorgesehen ist. Das Channel-Switching-Modul wird demgegenüber typischerweise in Europa deaktiviert, da die Verwendung unterschiedlicher Kanäle in Europa nicht vorgesehen ist.

Die Erfindung betrifft des Weiteren ein Fahrzeug-zu-X-Kommunikationsmodul, welches dazu konfiguriert ist, ein erfindungsgemäßes Verfahren auszuführen. Das Fahrzeug-zu-X-Kommunikationsmodul kann so ausgebildet sein, wie es bereits weiter oben beschrieben wurde. Hinsichtlich des Verfahrens kann auf alle beschriebenen Ausführungen und Varianten zurückgegriffen werden. Erläuterte Vorteile gelten entsprechend.

Die Erfindung betrifft des Weiteren ein nichtflüchtiges computerlesbares Speichermedium, welches einen Programmcode enthält, bei dessen Ausführung durch einen Prozessor ein erfindungsgemäßes Verfahren ausgeführt wird. Auch hinsichtlich dieses Verfahrens kann auf alle beschriebenen Ausführungen und Varianten zurückgegriffen werden.

Weitere Merkmale und Vorteile wird der Fachmann den nachfolgend mit Bezug auf die beigefügte Zeichnung beschriebenen Ausführungsbeispielen entnehmen. Dabei zeigen
- Fig. 1:: ein Fahrzeug-zu-X-Kommunikationsmodul,
- Fig. 2:: einen Überblick über eine Fahrzeug-zu-X-Steuerungssoftware mit integriertem dualen Stack,
- Fig. 3:: Details in Empfangsrichtung der Software von Fig. 2.

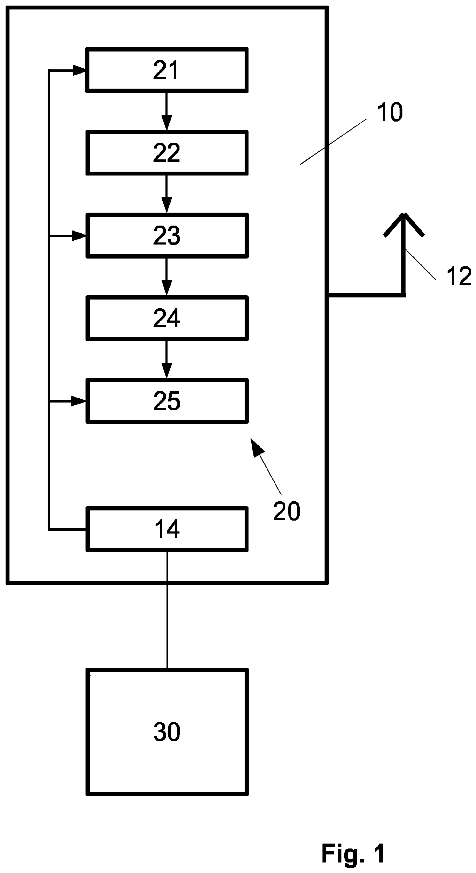

Fig. 1 zeigt ein Fahrzeug-zu-X-Kommunikationsmodul 10 in einer schematischen Darstellung. Es sei verstanden, dass hier nur einige Komponenten dargestellt sind, welche für das Verständnis der Erfindung relevant sind. Das Fahrzeug-zu-X-Kommunikationsmodul 10 ist mit einer Antenne 12 verbunden, welche zur Kommunikation mit anderen Fahrzeugen oder auch zur Kommunikation mit Infrastruktur dient.

In dem Fahrzeug-zu-X-Kommunikationsmodul 10 sind einige schematisch dargestellte Stufen 20, nämlich eine erste Stufe 21, eine zweite Stufe 22, eine dritte Stufe 23, eine vierte Stufe 24 und eine fünfte Stufe 25 implementiert. Des Weiteren ist in dem Fahrzeug-zu-X-Kommunikationsmodul 10 ein Gebietsbestimmungsmodul 14 angeordnet, welches mit einem zum Fahrzeug-zu-X-Kommunikationsmodul 10 externen Satellitennavigationsmodul 30 verbunden ist. Über das Satellitennavigationsmodul 30 erhält das Gebietsbestimmungsmodul 14 Daten über den aktuellen Standort eines Fahrzeugs, in welchem das Fahrzeug-zu-X-Kommunikationsmodul 10 angeordnet ist. Es bestimmt grundsätzlich beim Einschalten des Fahrzeug-zu-X-Kommunikationsmoduls 10, in welchem Gebiet sich das Fahrzeug derzeit befindet und legt abhängig davon einen entsprechenden Gebietsstatus fest.

Der Gebietsstatus wird an die erste Stufe 21, die dritte Stufe 23 und die fünfte Stufe 25 gemeldet. Diese drei Stufen 21, 23, 25 gehören einer ersten Gruppe von Stufen an, bei welchen die Art der Nachrichtenverarbeitung davon abhängt, in welchem Gebiet sich das Fahrzeug-zu-X-Kommunikationsmodul 10 befindet. Die beiden anderen Stufen, nämlich die zweite Stufe 22 und die vierte Stufe 24, gehören dagegen einer zweiten Gruppe von Stufen an, bei welchen die Nachrichtenverarbeitung nicht vom Gebiet abhängt. Die beiden Stufen 22, 24 der zweiten Gruppe sind in diskreten Hardwaremodulen implementiert, welche für alle in Frage kommenden Gebiete einmalig entwickelt wurden und weltweit verwendbar sind. Die Stufen 21, 23, 25 der ersten Gruppe sind hingegen in Software implementiert, um eine größere Flexibilität zu gewährleisten.

Durch die beschriebene Ausführung kann das Fahrzeug-zu-X-Kommunikationsmodul 10 in unterschiedlichen Gebieten verwendet werden, ohne dass ein Austausch von Komponenten, eine Einspielung neuer Software oder ein Eingriff des Fahrers notwendig wäre.

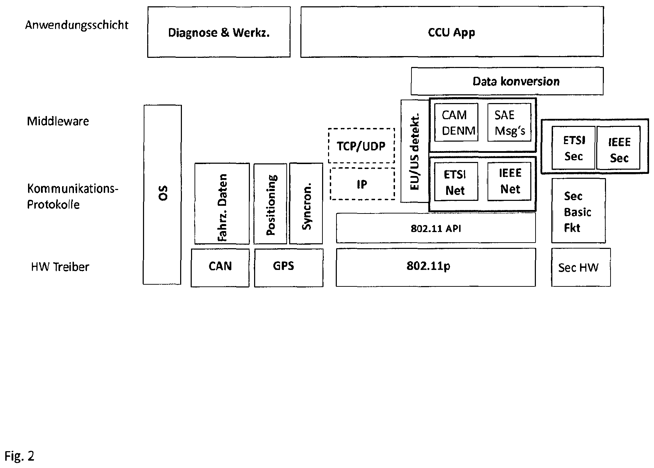

Fig. 2 zeigt einen Überblick über eine Steuerungssoftware für Fahrzeug-zu-X-Kommunikation mit integriertem dualen Stack.

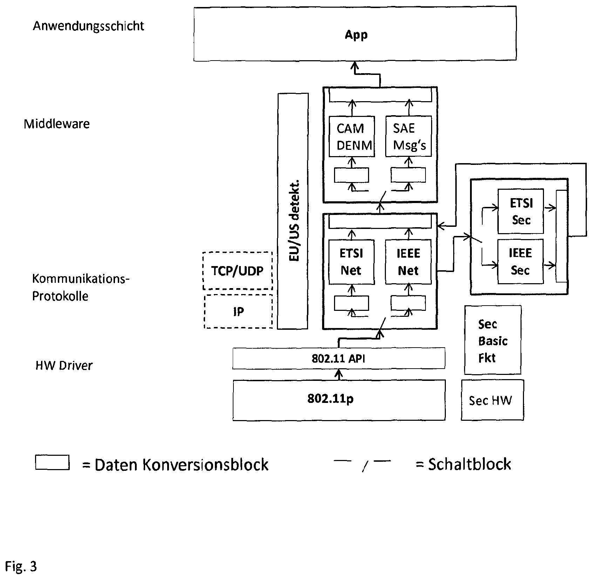

Fig. 3 zeigt eine Detailansicht einer Empfangsrichtung der Software von Fig. 2.

Die Fig. 2 und 3 werden nicht weiter beschrieben, bezüglich deren Funktionalität sei vielmehr auf die Figuren verwiesen.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

Fig. 2 zeigt einen Überblick über eine Steuerungssoftware für Fahrzeug-zu-X-Kommunikation mit integriertem dualen Stack.

Dabei sind vier Schichten gezeigt. Oben ist eine als "Application Layer" bezeichnete Anwendungsschicht dargestellt. Darunter befinden sich Middleware, Kommunikationsprotokolle und schließlich die Hardware-Treiber, welche als "HW Driver" bezeichnet sind.

Hardwareseitig sind Schnittstellen zu einem CAN-Bus, zu einem GPS-Satellitenkommunikationsmodul, zu einem 802.11p-Kommunikationssystem und zu Sicherheitshardware (als "SecHW" bezeichnet) dargestellt. Über den CAN-Bus wird eine Kommunikation mit anderen Fahrzeugkomponenten ermöglicht, beispielsweise können Fahrzeugdaten empfangen werden. Über das GPS-Modul können der Standort des Fahrzeugs und eine koordinierte Zeit, insbesondere eine Weltzeit (UTC) empfangen werden. Damit kann beispielsweise eine interne Uhr synchronisiert werden. Dies erlaubt insbesondere die zeitlich korrekte Zuordnung von Nachrichten. Über das 802.11p-Kommunikationssystem können Fahrzeug-zu-X-Nachrichten gesendet und empfangen werden. Hierzu können beispielsweise Protokolle wie TCP, UDP oder IP verwendet werden. Der Zugriff erfolgt über eine 802.11 API (Application Programming Interface). Die Sicherheitshardware erlaubt diverse Sicherheitsfunktionen, welche weiter unten erläutert werden. Der Zugriff auf die Sicherheitshardware kann über Security Basic Functions erfolgen.

Bezüglich der Kommunikationsprotokolle und der Middleware ist eine zweipfadige Verarbeitung dargestellt. Die Wahl des Pfads hängt dabei von einer Detektion ab, ob sich das Fahrzeug in der EU oder in den USA befindet. Diese Detektion ist links neben den Pfaden dargestellt.

Der in der EU verwendete Pfad ist mit "ETSI Net" und mit "CAM DENM" bezeichnet. Dazu gehört über der Sicherheitshardware der Block "ETSI Sec", welcher Sicherheitsfunktionen bereitstellt. Der in den USA verwendete Pfad ist mit "IEEE Net" und mit "SAE Msg's" bezeichnet. Dazu gehört über der Sicherheitshardware der Block "IEEE Sec", welcher Sicherheitsfunktionen bereitstellt.

Die Funktion der gezeigten Software wird über die Ebenen Middleware, Kommunikationsprotokolle und Hardware von einem als "OS" bezeichneten Betriebssystem gesteuert und überwacht.

Auf der Anwendungsschicht befindet sich eine "CCU App", welche diverse Anwendungen der Fahrzeug-zu-X-Kommunikation bereitstellt. Des Weiteren sind auch noch Softwaremodule für Diagnosezwecke und andere Softwarewerkzeuge, zusammenfassend als "Diagnosis & Tools" bezeichnet, vorhanden.

Fig. 3 zeigt eine Detailansicht einer Empfangsrichtung der Software von Fig. 2. Dabei sind insbesondere Signallaufpfade detaillierter dargestellt.

Eine über die 802.11 API hereinkommende Nachricht wird einem der beiden Pfade zugeführt, wie dies durch einen Schalter dargestellt ist. Derartige Schalter sind in der Praxis als virtuelle Schalter realisiert.

Wenn es sich bei der Nachricht um eine Nachricht handelt, welche keinen speziellen Sicherheitsanforderungen unterliegt, kann sie direkt eine Stufe höher weitergegeben werden, wo ebenfalls eine Zuordnung durch einen virtuellen Schalter erfolgt. Wenn es sich dagegen um eine Nachricht handelt, welche speziellen Sicherheitsanforderungen unterliegt, wird sie zunächst zu dem weiter rechts über der Sicherheitshardware dargestellten Block weitergegeben. Dort können Funktionen wie beispielsweise eine Entschlüsselung der Nachricht oder eine Integritätsüberprüfung durchgeführt werden. Auch dies kann in Abhängigkeit von der geographischen Region erfolgen, wozu wiederrum ein virtueller Schalter vorgesehen ist. Anschließend wird die Nachricht wieder zurück in den Pfad über der 802.11 API weitergegeben, wo sie entsprechend verarbeitet wird. Nach den Verarbeitungsschritten vom Empfang bis zur Middleware wird die Nachricht schließlich an eine als "App" bezeichnete Anwendung weitergegeben.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.
Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Verfahren zum Verarbeiten einer Fahrzeug-zu-X-Nachricht in einer Mehrzahl von Stufen in einem Fahrzeug-zu-X-Kommunikationsmodul (10) eines Fahrzeugs, wobei
- Stufen (21, 23, 25) einer ersten Gruppe von Stufen (20) dazu konfiguriert sind, die Fahrzeug-zu-X-Nachricht in Abhängigkeit von einem Gebietsstatus des Fahrzeug-zu-X-Kommunikationsmoduls (10) unterschiedlich zu verarbeiten,
- wobei die erste Gruppe von Stufen eine echte Teilmenge der Mehrzahl von Stufen (20) ist,
- wobei Stufen (22, 24) einer zweiten Gruppe von Stufen dazu konfiguriert sind, die Fahrzeug-zu-X-Nachricht unabhängig von dem Gebietsstatus zu verarbeiten,
- wobei die erste Gruppe von Stufen und die zweite Gruppe von Stufen keine Schnittmenge aufweisen,
- wobei die erste Gruppe von Stufen und die zweite Gruppe von Stufen zusammen die Mehrzahl von Stufen (20) ausmachen,
wobei das Verfahren ferner folgenden Schritt aufweist:
- Ermitteln des Gebietsstatus anhand eines Orts des Fahrzeug-zu-X-Kommunikationsmoduls (10), und
- wobei der Schritt des Ermittelns des Gebietsstatus ansprechend auf ein Einschalten des Fahrzeug-zu-X-Kommunikationsmoduls (10) durchgeführt wird, **dadurch gekennzeichnet, dass** der Gebietsstatus während der Fahrt beibehalten wird.

2. Verfahren nach Anspruch 1,
- wobei eine Anzahl von Stufen (22, 24) der zweiten Gruppe von Stufen in separater Hardware implementiert sind.

3. Verfahren nach einem der vorhergehenden Ansprüche,
- wobei ein ASN.1-Encoder/Decoder Teil der zweiten Gruppe von Stufen ist.

4. Verfahren nach einem der vorhergehenden Ansprüche,
- wobei die Stufen (21, 23, 25) der ersten Gruppe von Stufen in Software implementiert sind.

5. Verfahren nach einem der vorhergehenden Ansprüche,
- wobei ein Multihopping-Modul und/oder ein Channel-Switching-Modul Teil der ersten Gruppe von Stufen sind.

6. Fahrzeug-zu-X-Kommunikationsmodul (10), welches dazu konfiguriert ist, ein Verfahren nach einem der vorhergehenden Ansprüche auszuführen.

7. Nichtflüchtiges computerlesbares Speichermedium, welches Programmcode enthält, bei dessen Ausführung durch einen Prozessor ein Verfahren nach einem der Ansprüche 1 bis 5 ausgeführt wird.

## Claims

1. A method of processing a vehicle-to-X message in a plurality of stages in a vehicle-to-X communications module (10) of a vehicle, wherein
- stages (21, 23, 25) of a first group of stages (20) are configured to process the vehicle-to-X message differently depending on an area status of the vehicle-to-X communications module (10),
- wherein the first group of stages is a proper subset of the plurality of stages (20),
- wherein stages (22, 24) of a second group of stages are configured to process the vehicle-to-X message independent from the area status,
- wherein the first group of stages and the second group of stages have no intersection,
- wherein the first group of stages and the second group of stages together make up the plurality of stages (20), wherein the method further comprises the following step:
- determining the area status based on a location of the vehicle-to-X communications module (10),
- wherein the stage of determining the area status is carried out in response to a switching on of the vehicle-to-X communications module (10), **characterized in that** the area status is maintained while driving.

2. The method according to Claim 1,
- wherein a quantity of stages (22, 24) of the second group of stages is implemented in separate hardware.

3. The method according to any one of the preceding claims,
- wherein an ASN.1 encoder/decoder is part of the second group of stages.

4. The method according to any one of the preceding claims,
- wherein the stages (21, 23, 25) of the first group of stages are implemented in software.

5. The method according to any one of the preceding claims,
- wherein a multihopping module and/or a channel-switching module are part of the first group of stages.

6. A vehicle-to-X communications module (10) which is configured to carry out a method according to any one of the preceding claims.

7. A nonvolatile machine-readable storage medium which contains program code in the execution of which by a processor a method according to any one of Claims 1 to 5 is carried out.

## Revendications

1. Procédé de traitement d'un message de véhicule à X en une pluralité d'étages dans un module de communication de véhicule à X (10) d'un véhicule, dans lequel
- des étages (21, 23, 25) d'un premier groupe d'étages (20) sont configurés de manière à traiter différemment le message de véhicule à X en fonction d'un état de zone du module de communication de véhicule à X (10),
- dans lequel le premier groupe d'étages est un véritable sous-ensemble de la pluralité d'étages (20),
- dans lequel des étages (22, 24) d'un second groupe d'étages sont configurés de manière à traiter le message de véhicule à X indépendamment de l'état de zone,
- dans lequel le premier groupe d'étages et le second groupe d'étages ne présentent aucune intersection,
- dans lequel le premier groupe d'étages et le second groupe d'étages constituent ensemble la pluralité d'étages (20),
le procédé comprenant en outre l'étape suivante:
- Détermination de l'état de zone à l'aide d'un lieu du module de communication de véhicule à X (10),
- dans lequel l'étape de détermination de l'état de zone est effectuée en réponse à la mise en marche du module de communication de véhicule à X (10), caractérisé on ce que l'état de zone est maintenu pendant la conduite.

2. Procédé selon la revendication 1,
- dans lequel un nombre d'étages (22, 24) du second groupe d'étages sont mis en œuvre dans un matériel séparé.

3. Procédé selon l'une quelconque des revendications précédentes,
- dans lequel un encodeur-décodeur ASN.1 fait partie du second groupe d'étages.

4. Procédé selon l'une quelconque des revendications précédentes,
- dans lequel les étages (21, 23, 25) du premier groupe d'étages sont mis en œuvre dans un logiciel.

5. Procédé selon l'une quelconque des revendications précédentes,
- dans lequel un module à multibonds (Multihopping) et/ou un module de commutation de canaux (Channel-Switching) font partie du premier groupe d'étages.

6. Module de communication de véhicule à X (10), lequel est configuré de manière à exécuter un procédé selon l'une quelconque des revendications précédentes.

7. Support de stockage non volatile lisible par un ordinateur, lequel contient un code de programme, durant l'exécution duquel un procédé selon l'une des revendications 1 à 5 est exécuté par un processeur.
